# EUROPÄISCHE PATENTSCHRIFT

(11) **EP 2 556 247 B1**
(45) Veröffentlichungstag und Bekanntmachung des Hinweises auf die Patenterteilung: **22.11.2017**
(21) Anmeldenummer: 11714522.7
(22) Anmeldetag: 08.04.2011
(51) Int. Cl.: F03D 7/04, F03D 7/02

(54) **DYNAMISCHE TRÄGHEITSREGELUNG**
DYNAMIC INERTIA REGULATION
RÉGULATION D'INERTIE DYNAMIQUE

(30) Priorität: 08.04.2010 DE 102010014165
(43) Veröffentlichungstag der Anmeldung: 13.02.2013
(73) Patentinhaber: Senvion GmbH, 22297 Hamburg (DE)
(72) Erfinder: KRÜGER, Thomas, DK-8381 Tilst (DK); GEISLER, Jens, 24768 Rendsburg (DE); SCHRADER, Stefan, 24106 Kiel (DE)
(74) Vertreter: Glawe, Delfs, Moll
(86) Internationale Anmeldenummer: PCT/EP2011/055536
(87) Internationale Veröffentlichungsnummer: WO 2011/124696

(56) Entgegenhaltungen:
- WO-A1-2005/025026
- WO-A1-2010/000663
- MORREN J ET AL: "Inertial response of variable speed wind turbines", ELECTRIC POWER SYSTEMS RESEARCH, ELSEVIER, Bd. 76, Nr. 11, 1. Juli 2006 (2006-07-01), Seiten 980-987, XP027939242, ISSN: 0378-7796 [gefunden am 2006-07-01]
- SVENSSON AND P KARLSSON J: "Wind Farm Control Software Structure", INTERNATIONAL WORKSHOP ON TRANSMISSION NETWORKS FOR OFFSHORE WIND FARMS, XX, XX, 1. April 2002 (2002-04-01), Seiten 1-15, XP002254250,

## Beschreibung

Die Erfindung betrifft eine Windenergieanlage mit einem Windrotor, einem davon angetriebenen Generator, der mit einem Umrichter zusammenwirkt zur Erzeugung elektrischer Leistung, einer Drehzahlregelung und einer damit zusammenwirkenden Umrichtersteuerung, wobei die Drehzahlregelung ein Solldrehzahlsignal an die Umrichtersteuerung ausgibt.

Mit zunehmend größerer Verbreitung von Windenergieanlagen wird verlangt, dass auch sie wesentliche Beiträge zur Netzstabilität leisten. Ein wichtiger Aspekt hierbei ist die Bereitstellung von so genannter Regelleistung. Diese wird herkömmlicherweise meist durch konventionelle Kraftwerke, insbesondere Kohle- oder Gasturbinenkraftwerke bereitgestellt, und zwar insbesondere in der Form von innerhalb weniger Sekunden zusätzlich abrufbarer Leistung (Primärregelung). Um eine derart schnelle Reaktion gewährleisten zu können, ist es erforderlich, dass die entsprechenden Kraftwerke permanent "unter Dampf" gehalten werden. Dies ist aufwendig und verlangt einen hohen Einsatz von Brennstoff, der in vielen Fällen überhaupt nicht genutzt wird, wenn keine Regelleistung abgerufen wird. Um diesen Aufwand zu verringern, sollen auch Windenergieanlagen in die Primärregelung einbezogen werden.

Ein Problem hierbei ist, dass bei Windenergieanlagen die abgegebene Leistung vom Wind bestimmt ist und anders als bei herkömmlichen Kraftwerken nicht auf Anforderung erhöht werden kann. Um trotz dieser Einschränkung Windenergieanlagen zur Bereitstellung von Primärregelleistung nutzen zu können, ist es bekannt, die erforderliche Primärregelleistung aus der Schwungenergie des Rotors zu beziehen. Hierzu sind verschiedene Verfahren entwickelt worden:
Bei einem ersten Verfahren wird der Betriebspunkt der Windenergieanlage vorbeugend verändert. Die Windenergieanlage wird durch Veränderung bestimmter Betriebsparameter, insbesondere des Anstellwinkels der Rotorblätter, so verstellt, dass sie suboptimal betrieben wird (Janssens, N. et al: "Active Power Control Strategies of DFIG Wind Turbines", IEEE Power Tech 2007, Lausanne, Switzerland, 1.-5. July 2007). Damit ist es möglich, auf Anforderung Betriebsparameter zum optimalen Betriebspunkt hin zu verschieben, und so auch bei gleich bleibendem Wind mehr Leistung abzugeben und als Primärregelleistung abzurufen. Ein Nachteil dieses Ansatzes liegt darin, dass im Normalbetrieb (wenn keine Regelleistung angefordert ist) weniger Leistung durch die Windenergieanlage als eigentlich möglich aufgrund des suboptimalen Betriebspunkts erzeugt wird.

Bei einem alternativen Ansatz erfolgt eine Änderung des Betriebspunkts nur bei Bedarf, nämlich zur Entnahme zusätzlicher elektrischer Leistung als Primärregelleistung. Hierbei wird der Drehzahlregler der Windenergieanlage kurzfristig modifiziert und der Sollwert für die abzugebende Leistung entsprechend der zusätzlich abzugebenden Primärregelleistung erhöht (beispielsweise durch Anhebung des Solldrehmoments (Morren, J. et al: "Wind Turbines Emulating Inertia and Supporting Primary Frequency Control", IEEE Transactions on Power Systems, vol. 21, no. 1, February 2006)). Diese wie auch weitere bekannte Methoden sind zwar einfach, berücksichtigen aber nicht den Einfluss veränderter Windbedingungen während der Bereitstellung von Primärregelleistung. Diese bekannten Methoden sind vielmehr ausschließlich auf stationäre Betriebsbedingungen, also gleich bleibendem Wind hin ausgelegt. Dies bringt einen Nachteil mit sich, dass bei nicht stationären Windbedingungen - wie sie in der Praxis häufig anzutreffen sind - nur eine verschlechterte Bereitstellung von Primärregelleistung erreicht wird. Windenergieanlagen gemäß dem Stand der Technik sind aus WO2005/025026, WO2010/000663 und aus MORREN J ET AL: "Inertial response of variable speed wind turbines",ELECTRIC POWER SYSTEMS RESEARCH, ELSEVIER, Bd. 76, Nr. 11, 1. Juli 2006 (2006-07-01), Seiten 980-987, bekannt. Der Erfindung liegt die Aufgabe zugrunde, eine verbesserte Regelung für Windenergieanlagen anzugeben, die auch bei instationären Windgeschwindigkeiten ausreichende Primärregelleistung bereitstellt.

Die erfindungsgemäße Lösung liegt in den Merkmalen der unabhängigen Ansprüche. Vorteilhafte Weiterbildungen sind Gegenstand der abhängigen Ansprüche.

Bei einer Windenergieanlage mit einem Windrotor, einem davon angetriebenen Generator, der mit einem Umrichter zusammenwirkt zur Erzeugung elektrischer Leistung, einer Drehzahlregelung und einer damit zusammenwirkenden Umrichtersteuerung, wobei die Drehzahlregelung ein Solldrehzahlsignal ausgibt, ist erfindungsgemäß eine Zusatzregelung vorgesehen, die einen Eingang für eine gewünschte Zusatzleistung aufweist und dazu ausgebildet ist, daraus unter Berücksichtigung eines Rotorträgheitsmoments ein Drehzahländerungssignal zu erzeugen und als Ausgangssignal auszugeben, das über ein Verknüpfungsglied dem Solldrehzahlsignal hinzugefügt wird.

Die Erfindung beruht auf dem Gedanken, nicht die von der Windenergieanlage an das Netz abgegebene Leistung zu regeln, sondern (sozusagen am Eingang des Systems der Windenergieanlage) die aus der Schwungmasse des Windrotors entnommene Energie zu steuern. Indem von der Zusatzregelung ein Signal für eine Drehzahländerung bestimmt wird, wird damit der Schwungmasse des Windrotors kontrolliert eine bestimmte Energie entnommen. Diese Energie entspricht der Differenz zwischen der in der Schwungmasse gespeicherten kinetischen Energie vor und nach Berücksichtigung der Drehzahländerung. Diese ermöglicht im Sinne eines "energy tracking" eine Kontrolle der je Zeiteinheit aus dem Windrotor abgerufenen Schwungenergie, die als kinetische Stützleistung die auf den Generator wirkende mechanische Leistung erhöht, welche von dem Generator in eine entsprechend erhöhte elektrische Leistung umgewandelt werden kann. Auf diese Weise wird die gewünschte Primärregelleistung zur Verfügung gestellt.

Mit der Erfindung wird erreicht, dass die zusätzlich zur Verfügung gestellte Leistung ausschließlich aus der Schwungmasse des Rotors gezogen wird und dabei die aus dem Wind generierte Leistung ohne Einfluss ist. Die "Dosierung" der zusätzlich zugeführten Leistung, also der Primärregelleistung, geschieht also allein über das Drehzahländerungssignal. Sie ist unabhängig vom tatsächlichen Windangebot, so dass auch bei schwankenden Windverhältnissen, insbesondere auch bei stark abfallender Windgeschwindigkeit, eine präzise Bereitstellung der Primärregelleistung sichergestellt ist. Diese erheblichen Vorteile in Bezug auf Bereitstellung von Primärregelleistung verknüpft die Erfindung mit nur geringen Anforderungen in Bezug auf den Aufwand. Insbesondere ist keine zusätzliche Hardware erforderlich, sondern die erfindungsgemäße Zusatzregelung kann in der Regel in der ohnehin vorhandenen Betriebssteuerung implementiert sein.

Unter dem Begriff des Solldrehzahlsignals ist die Ausgangsgröße der Drehzahlregelung zu verstehen, die als Parameter an die Drehzahlsteuerung der Windenergieanlage und/oder den Generator bzw. den an den Generator angeschlossenen Umrichter angelegt ist zur Einstellung der Generatordrehzahl. In den meisten Fällen ist dies ein Soll-Drehzahlsignal selbst, jedoch kann dies auch ein Soll-Drehmomentsignal sein. Auch solche Signale sind von dem funktional zu verstehenden Begriff des "Solldrehzahlsignals" umfasst.

Unter Umrichtersteuerung ist eine Einrichtung zu verstehen, welchen die Abgabe elektrischer Leistung durch den von dem Generator und Umrichter gebildeten mechanisch-elektrischen Energiewandler kontrolliert. Üblicherweise wirkt sie direkt auf den Umrichter ein, jedoch soll es nicht ausgeschlossen sein, dass sie auch oder alternativ auf den Generator unmittelbar einwirkt.

Unter Zusatzregelung ist eine Einrichtung zu verstehen, welche unabhängig ist von der konventionell im Rahmen einer Betriebssteuerung der Windenergieanlage vorhandenen Drehzahlregelung. Vorzugsweise weist sie eine Drehzahlrückführung auf.

Vorzugsweise ist ein Korrekturglied vorgesehen, welches dazu ausgebildet ist, in Abhängigkeit von der abgerufenen Zusatzleistung Parameter der Zusatzregelung zu verändern. Zu diesen Parametern zählt auch der Betrag der Zusatzleistung selbst. Mit diesem Korrekturglied kann berücksichtigt werden, dass die Windenergieanlage bei Abruf der Zusatzleistung mit dadurch bedingter Drehzahlreduzierung außerhalb ihrer optimalen Betriebsbedingungen läuft und deswegen einen Leistungsverlust induziert. Würde dieser induzierte Leistungsverlust nicht berücksichtigt, so könnte dies dazu führen, dass nicht der gewünschte Zusatzleistungsbetrag erreicht wird. Mit dem Korrekturglied kann entsprechend vorgehalten werden. Dazu weist das Korrekturglied vorzugsweise ein Kennlinienglied auf. Dieses ermittelt abhängig von der abgeforderten Zusatzleistung einen Korrekturwert für die Solldrehzahl.

Vorzugsweise ist weiter ein Aerodynamikschätzer vorgesehen, welcher den aerodynamischen Wirkungsgrad des Windrotors schätzt. Aus der Bestimmung dieses Wirkungsgrads kann zusammen mit der Windgeschwindigkeit die aus dem Wind gewinnbare Leistung und - bei Abruf von Zusatzleistung - der sich aus der Deoptimierung ergebende Leistungsverlust bestimmt werden. Damit sich dieser Leistungsverlust nicht auf die Abgabeleistung der Windenergieanlage auswirkt, kann bei der Leistungsvorgabe entsprechend vorgehalten werden. Dazu wird der Ausgangswert des Aerodynamikschätzers mittels eines Verknüpfungsglieds der Anforderung für Zusatzleistung hinzugefügt. Damit wird erreicht, dass bei hohen Zusatzleistungsanforderungen, bei denen sich beträchtliche Änderungen an der Aerodynamik des Windrotors ergeben können, eine stabile Bereitstellung der Zusatzleistung gewährleistet ist. Vorzugsweise ist als eine Eingangsgröße des Aerodynamikschätzers die Windgeschwindigkeit vorgesehen. Dabei kann es sich um eine tatsächlich gemessene Größe handeln. Vorteilhaft ist aber ein Windbeobachter vorgesehen, welcher aus ohnehin in der Betriebssteuerung vorhandenen Parametern, insbesondere abgegebener elektrischer Leistung, Einstellwinkel des Windrotors und Rotordrehzahl die Windgeschwindigkeit bestimmt. Damit kann ein besonders gutes Betriebsverhalten des Aerodynamikschätzers erreicht werden. Vorzugsweise ist weiter ein Unterdrückungsglied vorgesehen, welches bei Volllast die Zusatzregelung sperrt. Dies beruht auf der Erkenntnis, dass im Nennlastbetrieb, also bei einer Windgeschwindigkeit oberhalb der Nennwindgeschwindigkeit, ausreichend Leistung aus dem Wind selbst zur Verfügung gestellt werden kann, und es daher nicht erforderlich ist, angeforderte Zusatzleistung aus der Schwungenergie des Windrotors zu beziehen. Eine unnötige Drehzahlabsenkung bei hoher Windgeschwindigkeit wird damit vermieden. Mit Vorteil weist das Unterdrückungsglied ein Startmodul auf, das dazu ausgebildet ist, bei sich ändernder Zusatzleistungsanforderung eine kurzfristige Drehzahländerung zuzulassen und dazu das Unterdrückungsmodul zu übersteuern. Unter kurzfristig wird hier ein Zeitraum von etwa 2 bis 60 Sekunden verstanden. Dies beruht auf der Kenntnis, dass im Volllastfall die Pitch-Regelung für die Blätter des Windrotors einige Sekunden benötigt, um einen neuen Pitch-Winkel einzustellen, mit dem die angeforderte Zusatzleistung aus dem Wind entnommen werden kann. Um diesen Zeitraum bis zur Einstellung des neuen Pitch-Winkels zu überbrücken, kann kurzfristig die angeforderte Zusatzleistung aus einer Drehzahlabsenkung des Zusatzreglers bereitgestellt werden. Das Ansprechverhalten der Windenergieanlage auf die Anforderung von Zusatzleistung unter Nennlast wird damit verbessert.

Bei einer bevorzugten Ausführungsform, die ggf. unabhängigen Schutz verdient, ist ein Grenzwertüberwachungsmodul vorgesehen, das die Zusatzregelung in Abhängigkeit einer Grenzwertverletzung begrenzt oder deaktiviert. Damit wird erreicht, dass durch das Bereitstellen der Zusatzleistung die Windenergieanlage nicht in einem Betriebsbereich betrieben wird, der die Windenergieanlage beschädigt bzw. überlastet. Insbesondere sind derartige Grenzwerte elektrotechnische Auslegungsgrenzen wie Schein-, Wirk- oder Blindströme, Spannungen oder thermische Grenzen an den Halbleitern des Umrichters, insbesondere eine zulässige Maximalleistung. Es kann sich bei der Grenzwertverletzung aber auch um die Überschreitung eines vorzugsweise drehzahlabhängigen Grenzdrehmoments handeln (beispielsweise implementiert in einem drehzahlabhängigen Kennlinienglied), so dass durch die Begrenzung des Zusatzreglers ein Betrieb in einem überlastenden Betriebsbereich vermieden wird. In einer besonders bevorzugten Weiterbildung überwacht das Grenzwertüberwachungsmodul eine Grenzwertüberschreitung der Ausgangsgröße des Aerodynamikschätzers. Damit wird angezeigt, dass ein kritischer aerodynamischer Verlust überschritten wird, so dass die Windenergieanlage nach Bereitstellen der Zusatzleistung ein überproportionales Maß an Leistung benötigt, um wieder die normale Drehzahl zu erreichen. Es wird damit ermöglicht, sozusagen präemptiv negative Auswirkungen durch die Bereitstellung der Zusatzleistung auf den fortdauernden Betrieb der Windenergieanlage vorab zu erkennen, und ggf. die Bereitstellung der Zusatzleistung zu begrenzen. Damit kann insbesondere vermieden werden, dass die Erholungsphase nach dem Bereitstellen der Zusatzleistung überproportional lange dauert und zu entsprechend verringerter Leistungseinspeisung ins Netz führt.

Vorzugsweise umfasst die Zusatzregelung weiter ein Drehmomentbegrenzungsglied. Damit wird auch bei Anforderung von Zusatzleistung das insgesamt wirkende Drehmoment auf einen einstellbaren Wert begrenzt. Dieser einstellbare Wert kann stationär oder vorzugsweise aus einem Kennlinienglied stammen. Dies dient nicht nur dazu, eine Überlastung des Antriebsstrangs zu vermeiden, sondern hat weiter bei Verwendung eines Kennlinienglieds auch den Vorteil, dass bestimmte Betriebsbereiche vermieden bzw. schneller durchfahren werden können. So ist es insbesondere zweckmäßig, das Drehmomentbegrenzungsglied so auszubilden, dass im Bereich der Synchrondrehzahl das Moment stark begrenzt ist. Damit wird der Umrichter vor einer Überlastung geschützt.

Bei einer bevorzugten Ausführungsform ist die Kennlinie umschaltbar von der ursprünglich verwendeten Kennlinie auf eine Kennlinie mit höherem Drehmoment. Dazu ist ein Kennlinienschaltmodul vorgesehen, welches mit der Drehzahlregelung der Windenergieanlage zusammenwirkt. Dabei wird, wenn Zusatzleistung angefordert wird, auf eine andere Kennlinie umgeschaltet, die im Vergleich zur ursprünglichen Kennlinie mehr Drehmoment vorsieht. Damit kann sofort die Leistungsabgabe erhöht werden. Der Begriff "Kennlinie" umfasst hierbei sowohl Arbeits- und/oder Grenzkennlinien. Unter Umschaltung auf eine andere Kennlinie kann die Umschaltung auf eine andere Regelungscharakteristik verstanden werden und/oder eine Weiterführung der Regelung in einem veränderten, insbesondere hinsichtlich des zulässigen Drehmoments, vergrößertem Arbeitsbereich.

Um eine Überlastung, insbesondere der elektrischen Komponenten, wie den Generator und den Umrichter, zu vermeiden, geht diese Leistungserhöhung, welche ja eine Wirkleistungserhöhung ist, einher mit einer Limitierung der Blindleistungsabgabe. Damit wird der Blindstrom verringert, so dass die elektrischen Komponenten nicht die zulässigen Maximalströme überschreiten. In vielen Fällen kann dies erfordern, dass die Blindleistungsabgabe nicht nur stark begrenzt, sondern sogar geblockt bzw. auf "Null" gesetzt wird.

Vorzugsweise ist eine Zusatzleistungsbestimmungseinrichtung vorgesehen, die dazu ausgebildet ist, anhand der im Netz gemessenen Frequenz die Zusatzleistung zu bestimmen. Dadurch wird erreicht, dass nicht erst auf die Vorgabe eines zentralen Zusatzleistungssollwerts gewartet werden muss, sondern unmittelbar nach Eintritt der Störung im elektrischen Netz reagiert werden kann. Dabei können verschiedene alternative Bestimmungsregler in der Zusatzleistungsbestimmungseinrichtung vorgesehen sein. Erstens kann vorgesehen sein, die Zusatzleistung proportional zur Frequenzabweichung zu bestimmen, wobei die Zusatzleistung umso höher ist, je größer die Frequenzabweichung ist. Zweitens kann aber auch vorgesehen sein, die Zusatzleistung stufenweise in Abhängigkeit bestimmter Werte der Frequenzabweichung zu erhöhen. Drittens kann auch nur vorgesehen sein, nach Überschreiten einer bestimmten Frequenzabweichung die maximal mögliche Zusatzleistung abzurufen. Die Frequenzabweichung der beispielhaft genannten Bestimmungsregler kann dabei als Abweichung des Istwerts der Frequenz von einem Sollwert oder Sollwertbereich der Frequenz im elektrischen Netz bestimmt werden.

Die Zusatzleistungsbestimmungseinrichtung wirkt vorzugsweise mit einem Dynamikmodul zusammen, welches vorzugsweise aus der Tiefe und/oder dem zeitlichen Gradienten eines Einbruchs der Frequenz im Netz die Zusatzleistung bestimmt. Damit können insbesondere konkrete Vorgaben der Netzbetreiber, wie eine Windenergieanlage auf einen Frequenzeinbruch durch Einspeisung von Zusatzleistung zu reagieren hat, auf effiziente Weise umgesetzt werden. Das gilt umso mehr dann, wenn gesondert für Anfang und Ende mittels eines Anstiegsglieds und eines Abklingglieds verschiedene Funktionen implementiert sind. So kann beispielsweise vorgesehen sein, dass die Windenergieanlage bei Erkennen einer Frequenzabweichung für einen bestimmten Zeitraum, beispielsweise 10 Sekunden, eine Zuatzleistung von 10 % zusätzlich einspeist, wobei im Anschluss daran die Leistungsabgabe der Windenergieanlage nicht unter einem bestimmten Prozentsatz des Ausgangswerts fallen darf, also beispielsweise mindestens 80 % der vor der Frequenzstörung eingespeisten Leistung für mindestens 20 Sekunden betragen muss. Andere Funktionen für Anstieg und Abklingen sind selbstverständlich möglich.

Vorzugsweise umfasst der Zusatzregler ein Drehzahlgradientenmodul, das dazu ausgebildet ist, nach Beendigung der Zusatzleistung die verbleibende Leistung auf eine Minimalleistung zu begrenzen. Nach der Beendigung der Einspeisung der Zusatzleistung benötigt die Windenergieanlage zusätzliche Energie aus dem Wind, um den bei den jeweiligen Windbedingungen normalen Drehzahlbereich wieder zu erreichen. Das Drehzahlgradientenmodul bewirkt, dass nach Beendigung der Zusatzleistungserzeugung vorrangig die Drehzahl wieder ansteigt (mit einem Mindestgradienten), so dass schnell wieder ein aerodynamisch günstiger Betriebsbereich (Verhältnis zwischen Drehzahl und Windgeschwindigkeit) erreicht ist. So wird verhindert, dass die Drehzahl so weit abfällt, dass die Windenergieanlage so wenig Leistung erzeugt, dass sie sich entweder abschaltet, den Eigenbedarf an Leistung nicht mehr deckt oder ein Mindestdrehmoment unterschreitet, das für einen sicheren Betrieb der Windenergieanlage erforderlich ist. Erst nach einem bestimmten Drehzahlanstieg erfolgt der weitere Drehzahlhochlauf mit einem Maximalgradienten, so dass nun vorrangig Leistung zur Einspeisung in das Netz erzeugt wird (wobei vorzugsweise ein nun reduzierter Mindestgradient einzuhalten ist). Damit löst die Erfindung den Zielkonflikt, dass nach Beendigung der Zusatzleistungsseinspeisung einerseits weiterhin möglichst viel Leistung einzuspeisen und andererseits die Windenergieanlage schnell wieder in einen effizienten und stabilen Betriebsbereich zurückzuführen ist.

Die Erfindung bezieht sich ferner auf einen Windpark mit mehreren Windenergieanlagen, die jeweils mit einem Windrotor, einem damit angetriebenen Generator mit einem Umrichter zur Zeugung elektrischer Leistung, einer Drehzahlregelung einer mit ihr zusammenwirkenden Umrichtersteuerung versehen sind, wobei die Drehzahlregelung ein Solldrehzahlsignal ausgibt, und weiter ein Parkmaster vorgesehen ist zur übergeordneten Regelung der Windenergieanlagen, wobei erfindungsgemäß an mindestens einem Teil der Windenergieanlagen eine Zusatzregelung vorgesehen ist, die einen Eingang für eine Zusatzleistung aufweist und dazu ausgebildet ist, daraus unter Berücksichtigung eines Rotorträgheitsmoments ein Drehzahländerungssignal zu erzeugen und als Ausgangssignal auszugeben, welches über ein Verknüpfungsglied dem Solldrehzahlsignal hinzugefügt wird, und der Parkmaster ein Trägheitskontrollmodul aufweist, das eine angeforderte Zusatzleistung auf die drehenden Windenergieanlagen aufteilt. Vorzugsweise geschieht diese Aufteilung derart, dass alle drehenden Windenergieanlagen ohne Berücksichtigung der von ihnen abgegebenen Leistung angesteuert sind. Damit wird erreicht, dass eine möglichst große Anzahl der Windenergieanlagen sich an einer Bereitstellung der Zusatzleistung beteiligt, und zwar auch solche, welche gegenwärtig nur wenige Leistung abgeben. Damit wird nicht nur eine Entlastung von solchen Windenergieanlagen erreicht, die eine hohe Nutzleistung abgeben, sondern überdies auch eine bessere stochastische Verteilung über den Windpark, so dass sich windbedingte Schwankungen stochastisch besser ausgleichen. Die Erfindung umfasst weiter entsprechende Verfahren zum Betreiben der Windenergieanlage oder des Windparks. Zur näheren Beschreibung wird auf vorstehende Erläuterung verwiesen.

Die Erfindung wird nachfolgend Bezug nehmend auf die beigefügte Zeichnung näher erläutert, in der vorteilhafte Ausführungsbeispiele dargestellt sind. Es zeigen:

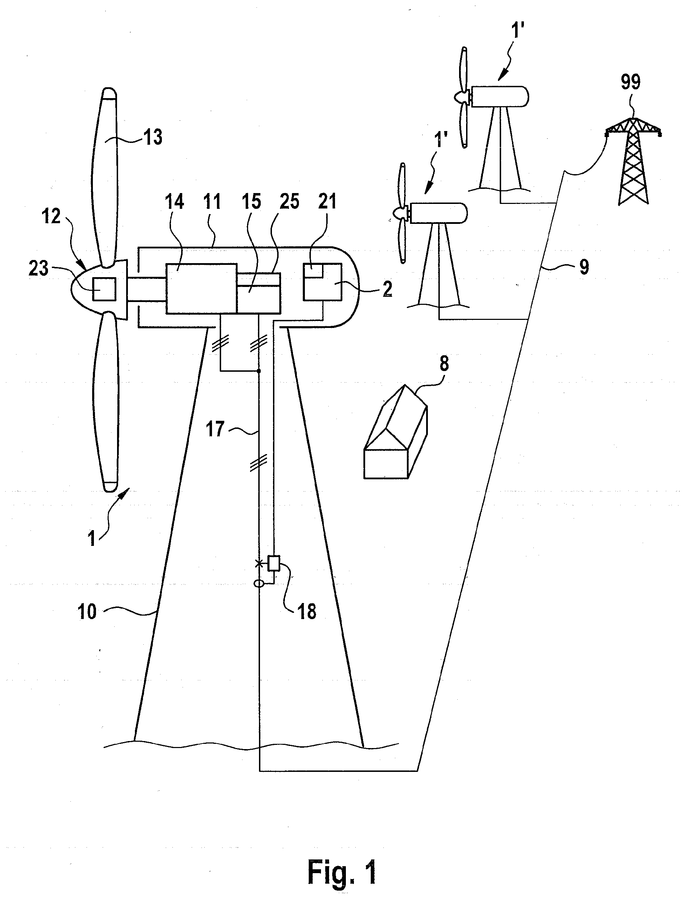

- Fig. 1: eine Übersichtsdarstellung einer Windenergieanlage in einem Ausführungsbeispiel der Erfindung;
- Fig. 2: eine Blockansicht einer Zusatzregelung und eines Zusatzkorrekturglieds gemäß dem Ausführungsbeispiel der Erfindung;
- Fig. 3: ein Diagramm mit Betriebsparametern in einem Teillastfall;
- Fig. 4: ein Diagramm mit Betriebsparametern in einem Volllastfall;
- Fig. 5: ein Diagramm zur Wirkungsweise des Zusatzkorrekturglieds;
- Fig. 6: ein Diagramm entsprechend Figur 3 bei instationärem Wind;
- Fig. 7: Leistungsdiagramme für verschiedene Windparks; und
- Fig. 8: Diagramme für Anstiegs- und Abklingfunktionen.

Eine Windenergieanlage 1 gemäß einem Ausführungsbeispiel der Erfindung ist in ihren Grundzügen konventionell aufgebaut. Sie umfasst einen Turm 10, an dessen oberem Ende ein Maschinenhaus 11 in Azimutrichtung schwenkbar angeordnet ist. An dessen Stirnseite ist ein Windrotor 12 drehbar angeordnet, der mit mehreren hinsichtlich ihres Einstellwinkels verstellbaren Rotorblättern 13 versehen ist. Zur Verstellung des Einstellwinkels ist eine Pitch-Regeleinrichtung 23 vorgesehen. Der Windrotor 12 treibt über eine Rotorwelle einen Generator 14 an. Dieser erzeugt zusammen mit einem an ihn angeschlossenen Umrichter 15 elektrische Energie. Der Generator 14 ist vorzugsweise als ein doppelt gespeister Asynchrongenerator ausgeführt, an dessen Stator eine Leitung zur Abführung der elektrischen Energie direkt angeschlossen ist, wobei die Leitung ferner angeschlossen ist an den Umrichter 15, der wiederum mit einem Rotor des Generators 14 verbunden ist. Die Leitung 17 ist über einen nicht dargestellten Transformator an ein windparkinternes Sammelnetz 9 angeschlossen. Sie kann auch über einen Transformator direkt an ein Mittel- oder Hochspannungsnetz 99 angeschlossen sein. Weiter an dem Maschinenhaus 11 angeordnet ist eine Betriebssteuerung 2, welche (über nicht dargestellte) Kommunikationsmittel mit einem Parkmaster 8 eines Windpark verbunden ist. Die Betriebssteuerung 2 führt den Betrieb der Windenergieanlage 1 und ist dazu mit verschiedenen spezialisierten Einrichtungen versehen, darunter eine Drehzahlregelung 21 für den Windrotor 12. Die von der Windenergieanlage 1 erzeugte und über die Leitung 17 abgegebene elektrische Leistung wird über eine Leistungsmesseinrichtung 18 erfasst und an die Betriebssteuerung 2 angelegt.

Die Windenergieanlage 1 kann einzeln aufgestellt sein. Meist wird sie jedoch in einem Windpark stehen, der aus mehreren Windenergieanlagen 1, 1' besteht. Die übrigen Windenergieanlagen 1' sind aufgebaut wie die Windenergieanlage 1, jedoch soll nicht ausgeschlossen sein, dass auch Windenergieanlagen anderen Typs in dem Windpark angeordnet sind. Die übergeordnete Führungsinstanz für die Windenergieanlagen 1, 1' bildet der Parkmaster 8, der mit den einzelnen Windenergieanlagen 1, 1' über (nicht dargestellte) Kommunikationsmittel verbunden ist. Die von den verschiedenen Windenergieanlagen 1, 1' erzeugte elektrische Leistung wird über ein windparkinternes Sammelnetz 9 zu einem Verknüpfungspunkt geführt, an dem der Windpark über einen nicht dargestellten Transformator an ein der Energieübertragung dienendes Mittel- oder Hochspannungsnetz 99 angeschlossen ist.

Die Betriebssteuerung 2 umfasst mit ihrem Drehzahlregler 21 eine Einheit, welche den Sollwert für eine Drehzahl des Windrotors 12 bestimmt und mit einem Umrichterregler 25 in der Weise zusammenwirkt, dass ein solches elektrisches Moment eingestellt wird, um die entsprechende Drehzahl des Windrotors 12 zu erreichen. Der Drehzahlregler 21 wirkt ebenfalls mit dem Blattwinkelregler 23 in der Weise zusammen, dass ein bestimmter Anstellwinkel der Rotorblätter 13 (Pitch-Winkel) gegenüber dem anströmenden Wind eingestellt wird, um eine Drehzahl des Windrotors 12 zu erreichen. Das Zusammenwirken des Drehzahlreglers 21 mit dem Umrichterregler 25 und dem Blattwinkelregler 23 wird anhand des Arbeitspunkts der Windenergieanlage 1 geregelt. Sind die Windbedingungen derart, dass die Windenergieanlage 1 nur unterhalb ihrer Nennleistung (alternativ auch ihrer Nenndrehzahl oder des Nennwindes) betrieben werden kann, spricht man vom Teillastbetrieb und der Drehzahlregler wirkt mit dem Umrichterregler 25 zusammen. Sind die Windbedingungen derart, dass die Windenergieanlage 1 mit ihrer Nennleistung betrieben werden kann, spricht man von Nennlastbetrieb und der Drehzahlregler 21 wirkt mit dem Blattwinkelregler 23 zusammen. Im Bereich des Übergangs von Teillastbetrieb zu Nennlastbetrieb kann vorgesehen sein, dass der Drehzahlregler 21 sowohl mit dem Blattwinkel- 23 als auch mit dem Umrichterregler 25 gleichzeitig zusammenwirkt.

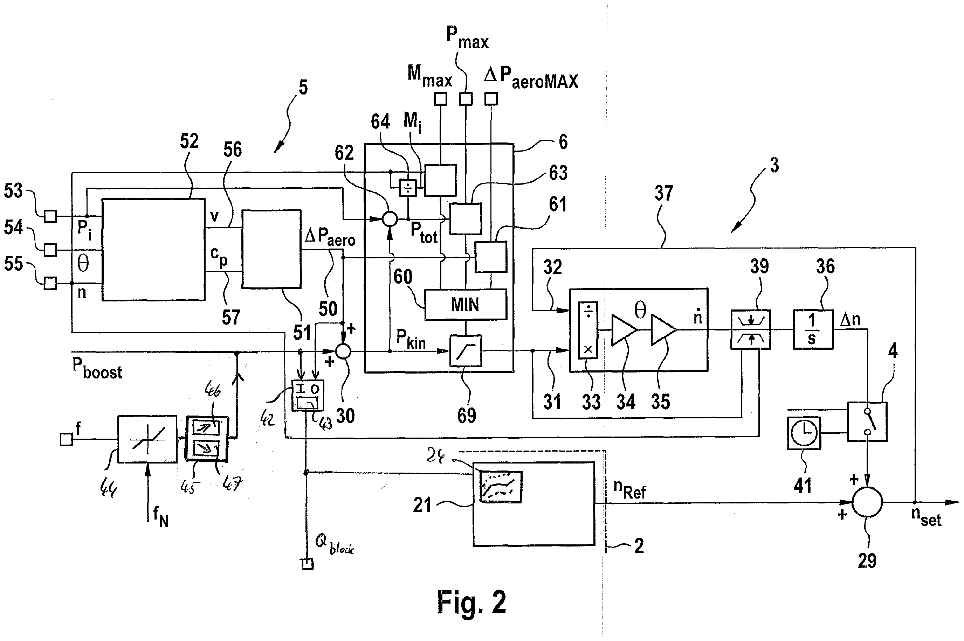

Der entsprechende Ausgang der Sollwertdrehzahl aus der Drehzahlregelung 21 ist in Figur 2 dargestellt. An diese Ausgangsleitung ist erfindungsgemäß ein Zusatzregler 3 angeschlossen. Dazu ist in der Leitung ein Verknüpfungsglied 29 vorgesehen, welches als Summationsglied ausgebildet ist und einen von dem Zusatzregler 3 bestimmten Wert auf den von der Drehzahlregelung 21 berechneten Drehzahlsollwert n_{ref} aufaddiert, um so den finalen Sollwert nₛₑₜ für die Umrichtersteuerung 25 zu generieren.

Der Zusatzregler 3 weist zwei Eingänge auf. An seinem ersten Eingang 31 ist ein Signal für eine zu liefernde kinetische Energie Pₖᵢₙ angeschlossen. An seinem zweiten Eingang 32 ist ein Signal für die Solldrehzahl nₛₑₜ angeschlossen. Der Zusatzregler 3 weist ein Divisionsglied 33 auf, welches den Wert des Eingangs 31 durch den des Eingangs 32 teilt. Durch Umformung mit einem konstanten Faktor mittels eines P-Glieds 34 entsteht daraus ein Maß für ein Trägheitsmoment θ. Dies wird mittels eines weiteren P-Glieds 35 geteilt durch einen konstanten Faktor, welcher der Rotationsträgheit J des Windrotors 12 entspricht. Daraus ergibt sich ein Wert für einen Drehzahlabfall, der einem Integrator 36 zugeführt wird. Dieser bestimmt durch Integration über eine Schrittzeit einen diskreten Differenzwert für die Drehzahl Δn, der auf das Verknüpfungsglied 29 aufgeschaltet wird. Somit wird der korrigierte Drehzahlsollwert nₛₑₜ gebildet. Dieser wird über eine Rückkoppelungsleitung 37 zu dem zweiten Eingang 32 des Drehzahlreglers zurückgeführt.

Die Funktionsweise ist, dass bei Anforderung einer kinetischen Leistung durch Division mit dem jeweils aktuellen Drehzahlsollwert ein Wert für das von der Schwungmasse des Windrotors 12 zu liefernde Trägheitsmoment θ gebildet wird und daraus unter Berücksichtigung der Rotationsträgheit die erforderliche Drehzahländerung ermittelt wird. Diese wird über das Verknüpfungsglied 29 auf den von der Betriebssteuerung 2 ausgegebenen Solldrehzahlwert hinzugefügt.

Im Fall von hohen Windgeschwindigkeiten, bei denen die Windenergieanlage 1 im Nennlastbetrieb läuft, ist es jedoch nicht erforderlich, eine zusätzlich angeforderte Leistung aus der kinetischen Energie des Windrotors 12 zu speisen. Um einem unerwünschten Drehzahlabfall hier vorzubeugen, ist ein Unterdrückungsmodul 4 vorgesehen. Es ist betätigt von einem Nennlastsignal, welches von der Betriebssteuerung 2 zur Verfügung gestellt ist. Liegt dies an, so erfolgt keine Absenkung von der Betriebssteuerung 2 ausgegebenen Werte für die Solldrehzahl. Allerdings kann dynamisch, d.h. zu Beginn der Anforderung für die Unterstützung der Leistung oder zu deren Ende, dennoch vorteilhafterweise eine Drehzahlabsenkung durchgeführt werden. Dies hat den Zweck, den Zeitraum zu überbrücken, bis der Blattwinkelregler 23 soweit nachregeln konnte, um die Zusatzleistung auch ohne Drehzahlabsenkung bereit zu stellen. Dazu ist vorzugsweise ein Zeitglied 41 vorgesehen, welches für den Zeitraum der Aktivität des Blattwinkelreglers 23 eine Korrektur des Drehzahlsollwerts wie vorstehend beschrieben ermöglicht.

Weiter ist optional ein Zusatzkorrekturglied 5 vorgesehen. Es umfasst einen Aerodynamikschätzer 51 sowie einen Windbeobachter 52. An den Windbeobachter 52 sind Eingänge vorgesehen. Der Eingang 53 ist für die erzeugte elektrische Leistung (gemessen von dem Sensor 18). Der zweite Eingang ist für den eingestellten Pitch-Winkel, welcher von dem Blattwinkelregler 23 übermittelt ist. An einem dritten Eingang 55 ist ein Wert für die Drehzahl des Generators 14 angeschlossen; vorzugsweise handelt es sich hierbei um einen Messwert, der von einem Sensor ermittelt ist. Der Windschätzer 52 bestimmt daraus einen Wert für eine Windgeschwindigkeit v, die an einem Ausgang 56 ausgegeben ist. Weiter wird ein Wert für einen aerodynamischen Wirkungsgrad C_{P} an einem Ausgang 57 ausgegeben. Der Aerodynamikschätzer 51 ist dazu ausgebildet, aus den Werten für die Windgeschwindigkeit v und dem für den aerodynamischen Wirkungsgrad C_{P} die aerodynamisch induzierte Verlustleistung ΔPₐₑᵣₒ zu berechnen. Dies kann beispielsweise mittels seines zweidimensionalen Kennfelds erfolgen. Der entsprechende Wert ist von dem Aerodynamikschätzer 51 an einem Ausgang 50 ausgegeben. Dieser Wert wird über eine Verknüpfungsstelle 30 einem von extern angelegten Sollwert für eine angeforderte Zusatzleistung P_{boost} zuaddiert, und so der Wert für die aus dem kinetischen System bereit zu stellende Leistung Pₖᵢₙ ermittelt, der an den Zusatzregler 3 angelegt ist. Der Wert für die angeforderte Zusatzleistung P_{boost} kann optional auch lokal an der Windenergieanlage 1 generiert sein. Dazu ist eine Zusatzleistungsbestimmungseinrichtung 44 vorgesehen, an deren Eingang ein Signal für die Frequenz im Sammelnetz 98 angelegt ist. Ergeben sich Abweichungen von einer einstellbaren Sollfrequenz fₙₒₘ, so wird Zusatzleistung angefordert. Deren Höhe kann voreingestellt sein oder bestimmt sich vorzugsweise aus dem Grad der Frequenzabweichung. Zweckmäßigerweise ist die Zusatzleistungsbestimmungseinrichtung 44 dazu mit einem Kennlinienglied versehen.

Optional ist ein in seiner Gesamtheit mit der Bezugsziffer 6 bezeichnetes Grenzwertüberwachungsmodul vorgesehen. Es umfasst als Kernelement einen Begrenzer 69, welcher das Signal für die aus dem kinetischen System bereit zu stellende Leistung Pₖᵢₙ auf einen Maximalwert begrenzt. Dieser Aspekt der Erfindung verdient gegebenenfalls unabhängigen Schutz. Die Begrenzung kann auf einen starren Maximalwert erfolgen, vorzugsweise erfolgt sie aber adaptiv und für mehrere Parameter. Dies wird im Folgenden näher erläutert. Das Grenzwertüberwachungsmodul 6 umfasst mehrere, im dargestellten Beispiel drei Grenzsignalmodule 61, 63, 65. Sie sind dazu ausgebildet, bestimmte Parameter in Bezug auf vorgebbare Grenzwerte zu überwachen und ein entsprechendes Signal an eine Bewertungslogik 60 zu übermitteln. An ein erstes Grenzsignalmodul 61 sind Signale für die vom Aerodynamikschätzer 51 ermittelte aerodynamische Verlustleistung ΔPₐₑᵣₒ und einen vorgebbaren Maximalverlustleistungswert ΔP_{aeroMAx} angelegt, zum Beispiel ΔP_{aeroMax} = 20% der Nennleistung. Das Grenzsignalmodul 61 vergleicht diese Werte und gibt bei Überschreiten des Maximalverlustleistungswerts nur dessen Wert an die Bewertungslogik 60 aus. Einem zweiten Grenzsignalmodul 63 vorgeschaltet ist ein Summierglied 62, an das Signale für die Leistung der Windenergieanlage vom Eingang 53 und für die angeforderte kinetische Leistung Pₖᵢₙ angelegt sind, und daraus eine geforderte Gesamtleistung Pₜₒₜ gebildet und als Eingangssignal an das zweite Grenzsignalmodul 63 angelegt wird. Weiter an das zweite Grenzsignalmodul 63 angelegt ist ein Signal für eine zulässige Maximalleistung Pₘₐₓ. Bei Überschreiten dieses Werts gibt das zweite Grenzsignalmodul 63 nur diesen Wert an die Bewertungslogik 60 aus. Ein drittes Grenzsignalmodul 65 überwacht, ob das sich aus der Leistungsanforderung ergebende Drehmoment M_{b} unterhalb einer zulässigen Grenze bleibt. Zur Bestimmung dieses Drehmoments kann ein Divisionsglied 64 vorgesehen sein, das die angeforderte Gesamtleistung Pₜₒₜ teilt durch die Drehzahl, beispielsweise angelegt vom Eingang 55, und so das angeforderte Drehmoment M_{b} bestimmt. Überschreitet es ein zulässiges Grenzdrehmoment Mmax, so wird ein entsprechend begrenzter Wert an die Bewertungslogik 60 übermittelt.

Die Bewertungslogik 60 wertet die verschiedenen angelegten Signale aus, und bestimmt daraus einen Maximalwert, der an den Begrenzer 69 angelegt ist. Die Bewertungslogik 60 ist in dem dargestellten Ausführungsbeispiel als eine Select-Low-Logik ausgeführt, bei der der niedrigste Grenzwert den Ausschlag gibt.

Optional ist ein Kennlinienschaltmodul 24 für die Drehzahlregelung vorgesehen. Es weist außer der im Normalbetrieb verwendeten Grundkennlinie (s. gestrichelte Linie) mindestens eine weitere Kennlinie auf, die ein erhöhtes Drehmoment vorsieht (s. durchgezogene Linie). Alternativ kann auch vorgesehen sein, dass das Kennlinienschaltmodul 24 eine Begrenzungskennlinie für den Normalbetrieb und mindestens eine Begrenzungskennlinie für einen erweiterten Drehmomentbereicht vorsieht (s. gepunktete Linie), so dass dem Drehmoment/Drehzahlregler ein erweiterter Betriebsbereich zur Verfügung steht.

Zur Betätigung des Kennlinienschaltmoduls 24 ist ein Schaltgeber 42 mit einem Überblendglied 43 vorgesehen. Der Schaltgeber 42 überwacht die Signalleitung für die angeforderte Zusatzleistung P_{boost} und schaltet dann, wenn sie angefordert wird, ein und betätigt das Kennlinienschaltmodul 24. Durch die Drehmomenterhöhung wird sofort mehr Wirkleistung erzeugt. Um einen Überstrom zu vermeiden, wird gleichzeitig die Abgabe von Blindstrom stark verringert oder ganz geblockt. Dazu wird ein entsprechendes Sperrsignal Q_{block} an die Betriebssteuerung 2 ausgegeben. Nach Beendigung der Zusatzleistungsanforderung erfolgt wieder ein Übergang zum Normalbetrieb. Dies erfolgt aber nicht abrupt, sondern allmählich, um Instabilitäten im mechanischen und elektrischen System der Windenergieanlage zu vermeiden. Dazu schaltet das Kennlinienschaltmodul 24 nicht sofort auf den Normalbetrieb zurück, sondern es wirkt mit dem Überblendglied 43 so zusammen, dass eine allmähliche Rückkehr zur ursprünglichen Kennlinie des Normalbetriebs erfolgt. Das Überblendglied 43 ist dabei so ausgelegt, dass die ursprüngliche Kennlinie erst dann wieder erreicht wird, wenn die Windenergieanlage wieder ihren normalen Betriebspunkt erreicht hat. Dazu wertet das Überblendglied 43 das Signal für die aerodynamische Verlustleistung ΔPₐₑᵣₒ aus. Ist dieser Wert Null bzw. unterhalb einer einstellbaren Schwelle, so ist der normale Betriebspunkt wieder erreicht. Es kann auch vorgesehen sein, dass diese Überblendung durch gesteuertes Umschalten in eine oder mehrere Übergangskennlinien vorgenommen wird.

Weiter ist ein Drehzahlgradientenmodul 39 vorgesehen. Es überwacht am Eingang 31 den Wegfall der Zusatzleistungsanforderung. Weiter ist ein Signal für die Drehzahl n des Windrotors 14 angelegt. Das Drehzahlgradientenmodul 39 umfasst einen Höchstgradienten- und einen Mindestgradientenbegrenzer. Es wird betätigt am Ende der Zusatzleistungsanforderung. Zu diesem Zeitpunkt ist die Drehzahl n des Windrotors 14 aufgrund der Entnahme kinetischer Energie gegenüber dem Ausgangswert reduziert. Die Reduzierung kann beträchtlich sein, so dass der Windrotor weit außerhalb seiner optimalen Betriebsbedingung läuft. Es wird daher zuerst ein Mindestgradient vorgegeben, so dass die Drehzahl schnell wieder ansteigt. Damit besteht Priorität für den Drehzahlanstieg. Andererseits wird über einen Höchstgradienten ein zu schneller Anstieg verhindert, so dass noch ausreichend Leistung zur Erzeugung elektrischer Energie zur Verfügung steht. Bei Erreichen einer Schaltdrehzahl werden vorzugsweise Maximal- und Mindestgradient verändert, und zwar hin zu geringeren Mindest- und Höchstgradienten. Damit besteht Priorität für die Energieerzeugung zu Lasten des Drehzahlanstiegs, der daher nun meist langsamer erfolgt.

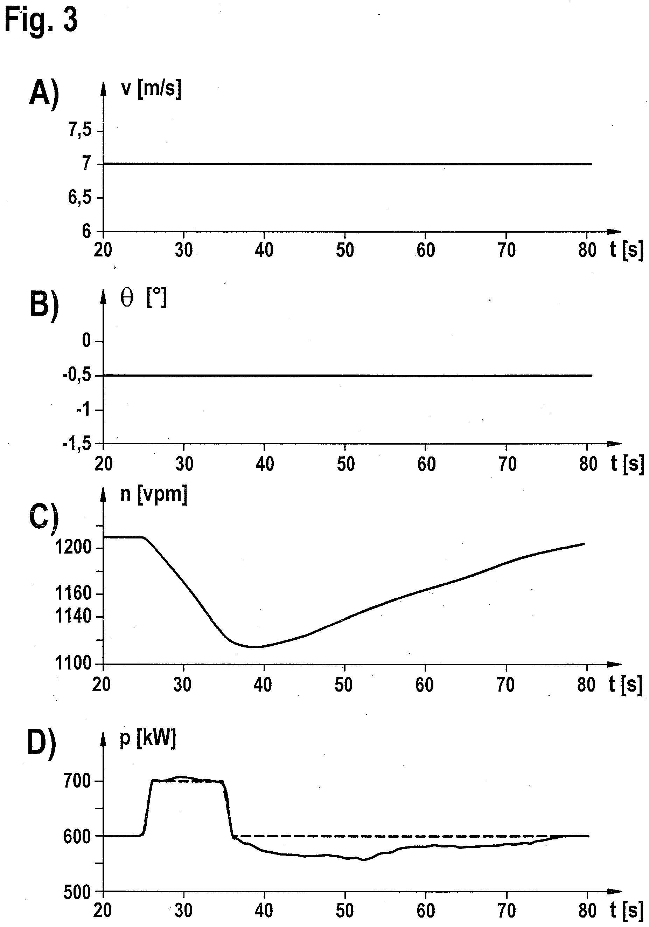

Damit ergibt sich im Teillastbetrieb das in Figur 3 dargestellte Verhalten. Die Windgeschwindigkeit sei als konstant angenommen, wie in Figur 3A dargestellt. Demgemäß ist der Pitch-Winkel der Rotorblätter 13 ebenfalls konstant, siehe Figur 3B. Zum Zeitpunkt t=25 Sekunden ist eine Anforderung für eine Unterstützungsleistung in Höhe von 100 kW in 10 Sekunden angelegt (s. gestrichelte Linie in Fig. 3). Der Zusatzregler 3 bestimmt laufend eine Drehzahländerung, welche zu dem ursprünglichen Sollwert hinzugerechnet wird, woraus ein kontinuierlicher Abfall der Drehzahl im Zeitraum t=25 bis t=35 Sekunden resultiert. Durch diesen Drehzahlabfall wird die kinetische Energie im Windrotor 12 verringert, die sich daraus ergebende Leistung wird als zusätzliche Leistung dem Generator und Umrichter 14, 15 zugeführt und als Primärregelleistung über die Leitung 17 ausgegeben (durchgezogene Linie in Fig. 3). Am Ende der Anforderung ab dem Zeitpunkt t=35 Sekunden ist die Drehzahl des Windrotors 12 beträchtlich abgefallen, so dass im Anschluss nicht gleich wieder die ursprünglich eingespeiste Leistung eingestellt werden kann, sondern erst nach allmählich erfolgtem Drehzahlanstieg (wegen der verhältnismäßig niedrigen Windgeschwindigkeit dauert dies recht lange bis zum Zeitpunkt t=80 Sekunden). Hierbei besteht durch das Drehzahlgradientenmodul 39 für die ersten zwanzig Sekunden Priorität für den Drehzahlhochlauf, während ab t=55 Priorität für die Leistungserzeugung besteht bei einem dann flacher verlaufenden Drehzahlanstieg (niedrigerer Drehzahlgradient).

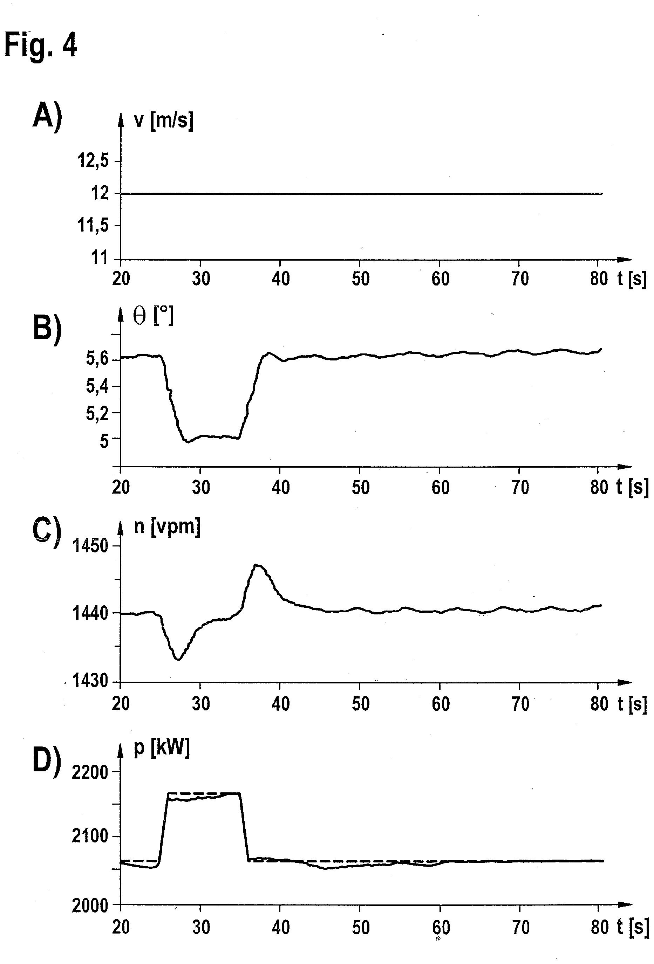

In Figur 4 ist wieder eine Anforderung für eine Zusatzleistung ab t=25 Sekunden für 10 Sekunden dargestellt; im Unterschied zu der Darstellung der Figur 3 ist die Windenergieanlage aber im Nennlastbetrieb. Die Windgeschwindigkeit (s. Fig. 4A) ist dementsprechend höher und liegt über der Nennwindgeschwindigkeit 11 m/s. Dies ermöglicht es, die Zusatzleistung an sich aus dem Wind zu generieren, wozu der Pitch-Winkel der Rotorblätter 13 verstellt werden muss; dies ist in Figur 4B dargestellt. Man erkennt, dass die Verstellung des Pitch-Winkels einige Zeit dauert, und zwar im dargestellten Ausführungsbeispiel etwa 2 Sekunden. Um auch während dieser Zeit schon die geforderte Zusatzleistung bereitstellen zu können, wird über das Unterdrückungsmodul 4 in Zusammenwirkung mit seinem Startmodul 41 zu Beginn der Anforderung der Zusatzleistung eine Absenkung der Drehzahl vorgenommen, wie vorstehend beschrieben. Dies kann beendet werden, wenn der Pitch-Winkel beim Zeitpunkt t=28 Sekunden seinen Wert erreicht hat. Das Unterdrückungsmodul 4 verbindet dann die Drehzahlabsenkung, so dass die Drehzahl dann wieder ansteigt und langsam ihren Ausgangswert erreicht. Dasselbe wiederholt sich mit umgekehrtem Vorzeichen zum Zeitpunkt t=35 Sekunden, wenn die Anforderung für die Zusatzleistung wegfällt. Man erkennt in Fig. 4D, dass mit dem Wirken des Startmoduls 41 jeweils am Beginn und Ende der Forderung für die Zusatzleistung bei t=25 und 35 Sekunden sowie mit dem Unterdrückungsmodul 4 in der Zeit dazwischen eine gute Übereinstimmung zwischen der angeforderten (gestrichelt) und der abgegebenen Leistung (durchgezogen) erreicht wird.

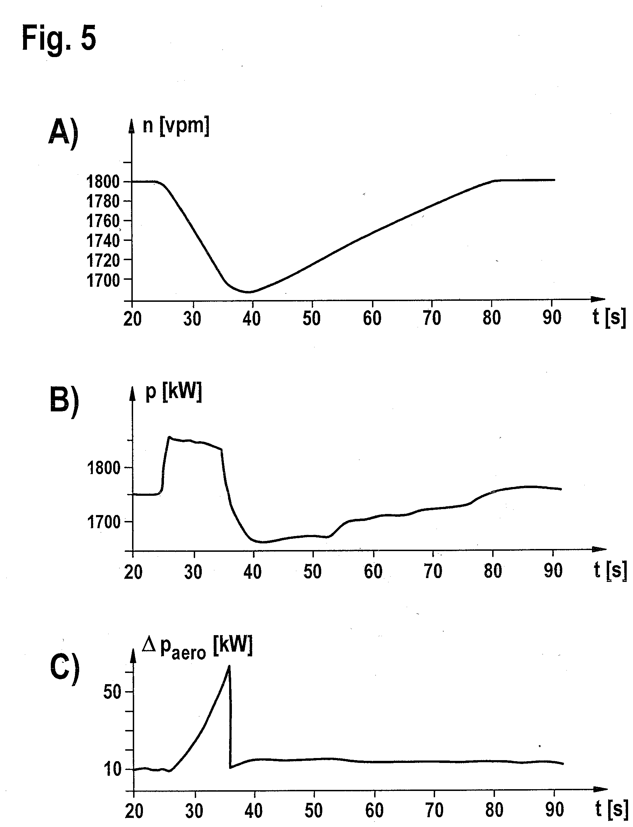

Die Wirkungsweise des Aerodynamikschätzers 51 ist in Figur 5 näher dargestellt. Es handelt sich wiederum um einen Betrieb in Teillast (vergleiche Figur 3), bei der zum Zeitpunkt t=25 Sekunden für 10 Sekunden eine Zusatzleistung angefordert wird. Die Zusatzleistung wird bereitgestellt durch eine kontinuierliche Drehzahlabsenkung (siehe Figur 5A), wodurch die elektrische Leistung um den geforderten Wert erhöht werden kann (siehe Figur 5B). Da mit der abfallenden Drehzahl die aerodynamischen Verhältnisse am Windrotor 12 immer schlechter werden, wird die Windenergieanlage 1 deoptimiert betrieben. Die sich daraus ergebende induzierte Verlustleistung wird von dem Aerodynamikschätzer 51 bestimmt. Dieser Wert ist in Figur 5C dargestellt. Man erkennt, dass dieser Wert eine Größenordnung erreicht, die mehr als die Hälfte der zur Verfügung gestellten Zusatzleistung erreicht, also nicht ignoriert werden kann. Dank des vorgesehenen Aerodynamikschätzers 51 kann trotz dieses erheblichen induzierten Verlusts die angeforderte Zusatzleistung stabil über den Zeitraum bereitgestellt werden.

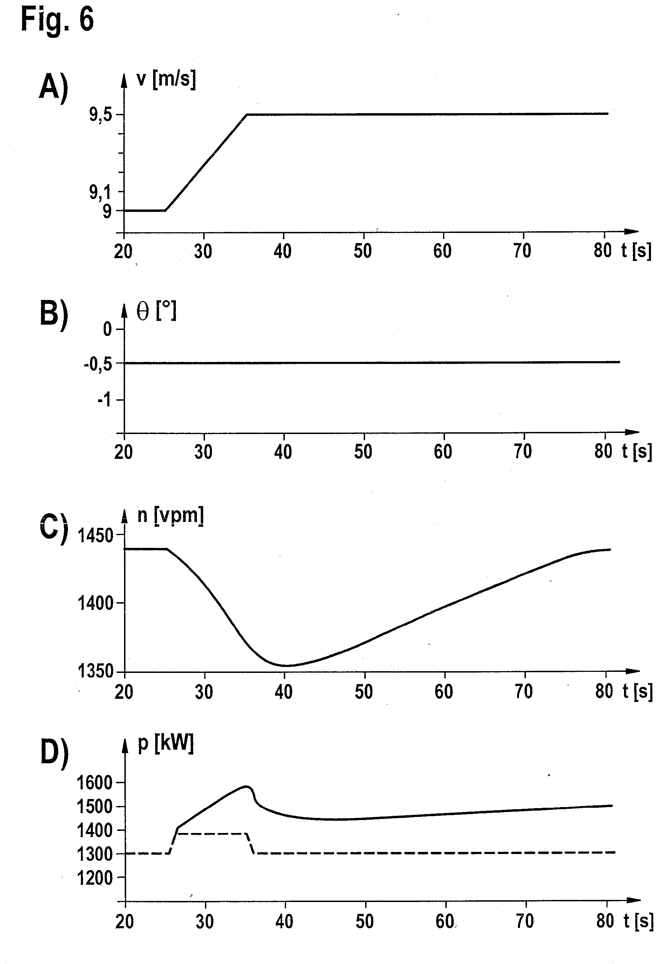

Figur 6 zeigt das Verhalten des erfindungsgemäßen Zusatzreglers 3 im Fall von instationären Windbedingungen, insbesondere steigendem Wind. Wie auch bei dem in Figur 3 dargestellten Fall, sind zum Zeitpunkt t=25 Sekunden für 10 Sekunden eine Zusatzleistung angefordert. Zeitgleich beginnt die Windgeschwindigkeit (Fig. 6A) an zu steigen. Die an sich angeforderte Leistung (welche die im Vorhinein nicht bekannte Windgeschwindigkeitssteigerung nicht berücksichtigt) ist in Figur 6D gestrichelt dargestellt. Die tatsächlich abgegebene Leistung ist mit einer durchgezogenen Linie dargestellt. Man erkennt, dass die von der Windenergieanlage tatsächlich abgegebene Leistung zusammen mit dem Anstieg der Windgeschwindigkeit ansteigt, und dennoch eine Überschussleistung - wie angefordert - abgegeben wird, wie deutlich an dem Abfall der abgegebenen Leistung zum Zeitpunkt des Endes der Anforderung bei t=35 Sekunden zu erkennen ist. Dank der erfindungsgemäßen Zusatzregelung kann damit sowohl Gebrauch gemacht werden von der gestiegenen Windgeschwindigkeit und dem dabei erhöhten Leistungsangebot, wie auch darüber hinaus noch zusätzlich die angeforderte Zusatzleistung zur Erfüllung der Primärregelung bereitgestellt werden. Dies zeigt, dass die Erfindung auch bei instationären Verhältnissen optimal arbeitet.

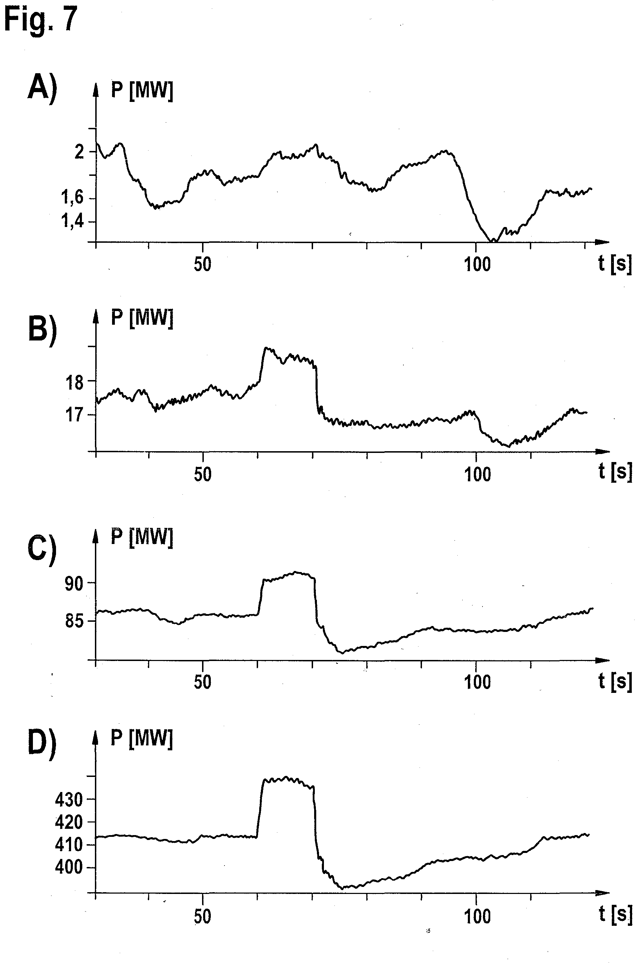

Die Anwendung der Erfindung in einem Windpark mit mehreren Windenergieanlagen ist in Figur 7 dargestellt. Figur 7A fungiert als Referenz und zeigt eine einzelne Windenergieanlage, Figur 7B einen Windpark mit 10, Figur 7C einen Windpark mit 50 und Figur 7D einen Windpark mit 240 Windenergieanlagen. Jeweils zum Zeitpunkt t=60 Sekunden tritt eine Zusatzleistungsanforderung in Höhe von 5% der installierten Leistung für 10 Sekunden auf. Bei der einzelnen Windenergieanlage ist das Erfüllen dieser Zusatzleistung kaum zu erkennen, da der entsprechende Leistungsanstieg durch die Leistungsunterschiede aufgrund veränderter Windgeschwindigkeiten überdeckt wird. Bei einem Windpark mit zehn Windenergieanlagen (Figur 7B) mitteln sich die stochastischen Änderungen der Windgeschwindigkeit teilweise raus, so dass die Zusatzleistung deutlicher heraustritt. Dies verstärkt sich für die Windparks mit mehr Windenergieanlagen (Figur 7C und Figur 7D), wobei schließlich bei Figur 7D zu beobachten ist, dass die stochastischen Schwankungen dank der großen Zahl der Windenergieanlagen praktisch ausgeglichen sind. Damit eignen sich große Windparks, bei denen die Erfindung angewendet ist, in ausgezeichneter Weise zur Bereitstellung von Zusatzleistung.

Bei einem Windpark mit einem Parkmaster kann vorgesehen sein, dass die geforderte Zusatzleistung durch den Parkmaster an die einzelnen Windenergieanlagen verteilt wird. Die Verteilung des Zusatzleistungssollwerts der Windparks auf die einzelnen Windenergieanlagen erfolgt proportional ihres Leistungsanteils zur Gesamtleistung des Windparks. Bevorzugt kann aber die Summe der Rotorträgheitsmomente aller im Windpark vorhandenen Windenergieanlagen vom Parkmaster bestimmt werden und die Zusatzleistungssollwerte der einzelnen Windenergieanlagen in Abhängigkeit des Anteils des Rotorträgheitsmoments der einzelnen Windenergieanlage im Verhältnis zur Summe der Rotorträgheitsmomente im Windpark bestimmt werden.

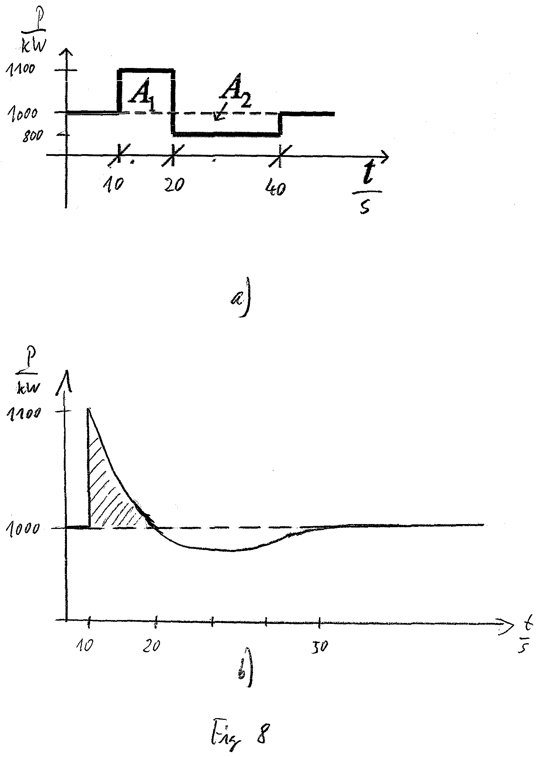

In Fig. 8 a und b sind zwei Beispiele für verschiedene Anstiegs- und Abklingfunktionen für die von der Windenergieanlage im Fall einer Frequenzstörung einzuspeisende Zusatzleistung dargestellt. Diese Funktionen sind in einem Dynamikmodul 45 implementiert (s. Fig. 2). Da sich Anstieg- und Abklingen unterscheiden, sind sie jeweils für sich in einem Anstiegsglied 46 bzw. einem Abklingglied 47 implementiert. Im Fall von Fig. 8a ist das Anstiegsglied so ausgeführt, dass beim Auftreten einer Netzstörung zum Zeitpunkt 10 sek eine Zusatzleistung von 10% zusätzlich eingespeist wird, und zwar für 10 Sekunden. Unmittelbar im Anschluss übernimmt das Abklinglied 47, welches die Zusatzleistung wegnimmt und sicherstellt, dass mindestens 80% der vor dem Auftreten der Frequenzabweichung eingespeisten Leistung auch während der Erholphase eingespeist werden, und zwar für 20 Sekunden. Zweckmäßigerweise kann das Dynamikmodul 45 dazu mit dem oben beschriebenen Gradientenmodul 36 zusammenwirken.

In Fig. 8b ist ein anderer Dynamikverlauf dargestellt. Hierbei unterscheiden sich Ansteigen und Abklingen sehr deutlich. Es ist vorgesehen, dass unmittelbar beim Auftreten der Frequenzabweichung zum Zeitpunkt 10 sek das Anstiegsglied 46 sofort auf maximale Zusatzleistung schaltet, welche dann hyperbelartig absinkt noch während die Frequenzstörung andauert (bis etwa zum Zeitpunkt 20 sek). Hierbei ist die Fläche unter der Kurve (durch Schraffur kenntlich gemacht) ein Maß für die aus dem Windrotor entnommene kinetische Energie. Kehrt die Frequenz zum Ende der Störung langsam wieder auf ihren ursprünglichen Wert zurück, so kann das Abklingglied 47 mit einem leichten Unterschwinger wieder dafür sorgen, dass der ursprüngliche Zustand nach weiteren 30 Sekunden erreicht wird. Mit einer solchen Implementation im Dynamikmodul kann die Windenergieanlage sich gegenüber dem Netz wie ein großer Synchrongenerator eines herkömmlichen Kraftwerks verhalten. Dank dieses Erfindungsaspekts kann dessen gute netzstützende Eigenschaft auf die Windenergieanlage übertragen werden.

## Patentansprüche

1. Windenergieanlage mit einem Windrotor (12), einem damit angetriebenen Generator (14), der mit einem Umrichter (15) zusammenwirkt zur Erzeugung elektrischer Leistung, einer Drehzahlregelung (21) und einer damit zusammenwirkenden Umrichtersteuerung (25), wobei die Drehzahlregelung (21) ein Solldrehzahlsignal (n_{ref}) ausgibt,
**dadurch gekennzeichnet, dass**
eine Zusatzregelung (3) vorgesehen ist, die einen Eingang (31) für eine Zusatzleistung aufweist und dazu ausgebildet ist, daraus unter Berücksichtigung eines Rotorträgheitsmoments ein Drehzahländerungssignal zu erzeugen und als Ausgangssignal auszugeben, das über ein Verknüpfungsglied (29) dem Solldrehzahlsignal hinzugefügt ist.

2. Windenergieanlage nach Anspruch 1, **dadurch gekennzeichnet, dass** ein Korrekturglied (5) vorgesehen ist, welches dazu ausgebildet ist, Parameter des Zusatzreglers (3) in Abhängigkeit von der abgerufenen Zusatzleistung zu verändern.

3. Windenergieanlage nach Anspruch 2, **dadurch gekennzeichnet, dass** ein Aerodynamikschätzer (51) vorgesehen ist, welcher einen aerodynamischen Wirkungsgrad und/oder Leistung der Windenergieanlage schätzt.

4. Windenergieanlage nach Anspruch 3, **dadurch gekennzeichnet, dass** weiter ein Windbeobachter (52) vorgesehen ist, der aus Daten zur Leistung und Drehzahl eine Windgeschwindigkeit bestimmt und an den Aerodynamikschätzer (51) ausgibt.

5. Windenergieanlage nach einem der vorangehenden Ansprüche, **dadurch gekennzeichnet, dass** ein Unterdrückungsglied (4) vorgesehen ist, welches bei Volllastbetrieb die Zusatzregelung (3) sperrt, und vorzugweise mit einem Startmodul (41) zusammenwirkt, das dazu ausgebildet ist, bei Änderungen einer Zusatzleistung das Unterdrückungsmodul (4) zu übersteuern.

6. Windenergieanlage nach einem der vorangehenden Ansprüche, **dadurch gekennzeichnet, dass** ein Grenzwertüberwachungsmodul (6) vorgesehen ist, das dazu ausgebildet ist, die Zusatzregelung (3) in Abhängigkeit einer Grenzwertverletzung zu begrenzen oder zu desaktivieren, insbesondere wenn ein Grenzwert für einen aerodynamischen Wirkungsgrad, eine elektrotechnische Grenze und/oder eine drehzahlabhängige Drehmomenten-Grenzkennlinie überschritten wird.

7. Windenergieanlage nach einem der vorangehenden Ansprüche, **dadurch gekennzeichnet, dass** der Zusatzregler (3) ein
Drehmomentbegrenzungsglied aufweist, das vorzugsweise dazu ausgebildet ist, die Drehzahländerung zu begrenzen.

8. Windenergieanlage nach einem der vorangehenden Ansprüche, **dadurch gekennzeichnet, dass** ein Kennlinienschaltmodul (24) für die Drehzahlregelung (21) vorgesehen ist, das bei Zusatzleistung auf eine andere Kennlinie mit höherem Drehmoment schaltet, wobei vorzugsweise ein Limitsignal (Qblock) zur Herabsetzung einer Blindleistungsabgabe erzeugt wird, und weiter vorzugsweise bei Beendigung der Zusatzleistung mittels eines Überblendglieds (43) allmählich auf die ursprüngliche Kennlinie zurückgeschaltet wird.

9. Windenergieanlage nach einem der vorangehenden Ansprüche, **dadurch gekennzeichnet, dass** eine Zusatzleistungsbestimmungseinrichtung (44) vorgesehen ist, die dazu ausgebildet ist, mittels einer im Netz (9, 99) gemessenen Frequenz die Zusatzleistung zu bestimmen, insbesondere mittels eines frequenzabhängigen Kennlinienglieds.

10. Windenergieanlage nach Anspruch 9, **dadurch gekennzeichnet, dass** die Zusatzleistungsbestimmungseinrichtung (44) mit einem Dynamikmodul (45) zusammenwirkt, welches vorzugsweise aus der Tiefe und/oder dem zeitlichen Gradienten eines Einbruchs der Frequenz im Netz (9, 99) die Zusatzleistung bestimmt, und zwar vorzugsweise gesondert für Anfang und Ende mittels eines Anstiegsglieds (46) und einem Abklingglied (47), die vorzugsweise unterschiedliche Funktionen implementiert haben.

11. Windenergieanlage nach einem der vorangehenden Ansprüche, **dadurch gekennzeichnet, dass** der Zusatzregler (3) ein Drehzahlgradientenmodul (39) aufweist, das dazu ausgebildet ist, nach Beendigung der Zusatzleistung einen Mindestgradienten für den Drehzahlanstieg vorzugeben und vorzugsweise einen Höchstgradienten.

12. Windpark mit einem Parkmaster (8) und mehreren Windenergieanlagen (1, 1'), wobei die Windenergieanlagen jeweils mit einem Windrotor (12), einem damit angetriebenen Generator (14), der mit einem Umrichter (15) zusammenwirkt zur Erzeugung elektrischer Leistung, einer Drehzahlregelung (21) und einer damit zusammenwirkenden Umrichtersteuerung (25) versehen sind, wobei die Drehzahlregelung (21) ein Solldrehzahlsignal (n_{ref}) ausgibt,
**dadurch gekennzeichnet, dass**
mindestens an einem Teil der Windenergieanlagen (1) eine Zusatzregelung (3) vorgesehen ist, die einen Eingang (31) für eine Zusatzleistung aufweist und dazu ausgebildet ist, daraus unter Berücksichtigung eines Rotorträgheitsmoments ein Drehzahländerungssignal zu erzeugen und als Ausgangssignal auszugeben, das über ein Verknüpfungsglied (29) dem Solldrehzahlsignal hinzugefügt ist, und der Parkmaster (8) ein Trägheitskontrollmodul (70) aufweist, welches die angeforderte Zusatzleistung auf besagten Teil der Windenergieanlagen (1, 1') aufteilt.

13. Windpark nach Anspruch 12, **dadurch gekennzeichnet, dass** das Trägheitskontrollmodul (70) dazu ausgebildet ist, die Zusatzleistung auf die drehenden Windenergieanlagen gleichmäßig aufzuteilen, und es insbesondere dazu ausgebildet ist, die Zusatzleistung auf die drehenden Windenergieanlagen derart aufzuteilen, dass der Anteil der Zusatzleistung der einzelnen Windenergieanlagen aus dem Verhältnis des Anteils des Rotorträgheitsmoments der einzelnen Windenergieanlagen im Verhältnis zur Summe der Rotorträgheitsmomente der sich drehenden Windenergieanlagen im Windpark bestimmt wird.

14. Verfahren zum Betreiben einer Windenergieanlage, die einen Windrotor (12), einen damit angetriebenen Generator (14), der mit einem Umrichter (15) zusammenwirkt zur Erzeugung elektrischer Leistung, eine Drehzahlregelung (21) und eine damit zusammenwirkenden Umrichtersteuerung (25) umfasst, umfassend ein Ausgeben eines Solldrehzahlsignals (n_{ref}),
**gekennzeichnet durch**
Anlegen eines Signals für eine Zusatzleistung,
Bestimmen und Ausgeben eines Drehzahländerungssignals unter Berücksichtigung eines Rotorträgheitsmoments, und
Hinzufügen des Drehzahländerungssignals zu dem Solldrehzahlsignal (n_{ref}).

15. Verfahren nach Anspruch 14, **dadurch gekennzeichnet, dass** eine Windenergieanlage nach einem der Ansprüche 2 bis 11 verwendet wird.

16. Verfahren zum Betreiben eines Windparks mit einem Parkmaster (8) und mehreren Windenergieanlagen (1, 1'), wobei die Windenergieanlagen jeweils mit einem Windrotor (12), einem damit angetriebenen Generator (14), der mit einem Umrichter (15) zusammenwirkt zur Erzeugung elektrischer Leistung, einer Drehzahlregelung (21) und einer damit zusammenwirkenden Umrichtersteuerung (25) versehen sind, umfassend ein Ausgeben eines Solldrehzahlsignals (n_{ref}),
**gekennzeichnet durch**
bei mindestens einem Teil der Windenergieanlagen
Anlegen eines Signals für eine Zusatzleistung,
Bestimmen und Ausgeben eines Drehzahländerungssignals unter Berücksichtigung eines Rotorträgheitsmoments, und
Hinzufügen des Drehzahländerungssignals zu dem Solldrehzahlsignal (n_{ref}), sowie
Aufteilen der angeforderten Zusatzleistung auf diesen Teil der Windenergieanlagen durch den Parkmaster (8).

17. Verfahren nach Anspruch 16, **dadurch gekennzeichnet, dass** es in einem Windpark nach einem der Ansprüche 12 oder 13 verwendet wird.

## Claims

1. Wind turbine having a wind rotor (12), a generator (14) driven by the latter and which interacts with a converter (15) to generate electrical power, a speed regulator (21), and a converter control unit (25) interacting with the latter, the speed regulator (21) outputting a target speed signal (n_{ref}), **characterized in that** an additional regulation system (3) is provided that has an input (31) for additional power and is designed so as to generate therefrom a change of speed signal, taking into account a moment of inertia of the rotor, and output it as an output signal that is added to the target speed signal via a logical element (29).

2. Wind turbine according to Claim 1, **characterized in that** a correction element (5) is provided that is designed to modify parameters of the additional regulation system (3) as a function of the additional power called up.

3. Wind turbine according to Claim 2, **characterized in that** an aerodynamic estimator (51) is provided that estimates the aerodynamic efficiency and/or power of the wind turbine.

4. Wind turbine according to Claim 3, **characterized in that** a wind observer (52) is provided that determines a wind speed from power and speed data and transmits it to the aerodynamic estimator (51).

5. Wind turbine according to one of the preceding claims, **characterized in that** a suppression element (4) is provided that blocks the additional regulation system (3) when operating under full load and preferably interacts with a start module (41) that is designed to override the suppression module (4) in the event of changes in additional power.

6. Wind turbine according to one of the preceding claims, **characterized in that** a module for monitoring threshold values (6) is provided that is designed so as to limit or deactivate the additional regulation system (3) as a function of the threshold value being violated, in particular when a threshold value for an aerodynamic efficiency, an electrotechnical limit and/or a speed-dependent torque threshold characteristic is exceeded.

7. Wind turbine according to one of the preceding claims, **characterized in that** the additional regulation system (3) has a torque limiting element that is preferably designed so as to limit the change of speed.

8. Wind turbine according to one of the preceding claims, **characterized in that** a characteristic switching module (24) is provided for the speed regulation system (21) that switches to a characteristic with a higher torque when there is additional power, a limit signal (Qblock) preferably being generated to decrease the output of reactive power and more preferably gradually being switched back to the original characteristic by means of a fade-in/out element (43) when the supply of additional power is completed.

9. Wind turbine according to one of the preceding claims, **characterized in that** a device for determining the additional power (44) is provided that is designed so as to determine the additional power using the frequency measured in the grid (9, 99), in particular using a frequency-dependent characteristic element.

10. Wind turbine according to Claim 9, **characterized in that** the device for determining the additional power (44) interacts with a dynamic module (45) that preferably determines the additional power from the depth and/or the time gradients of a dip in the frequency in the grid (9, 99), and to be precise preferably separately for the beginning and end by means of an increasing element (46) and a decay element (47) that have preferably implemented different functions.

11. Wind turbine according to one of the preceding claims, **characterized in that** the additional regulator (3) has a speed gradient module (39) that is designed to specify a minimum gradient for the rise in speed after the supply of additional power is completed, and preferably a maximum gradient.

12. Wind farm having a wind farm control center (8) and multiple wind turbines (1, 1'), the wind turbines each being provided with a wind rotor (12), a generator (14) driven by the latter and which interacts with a converter (15) to generate electrical power, a speed regulator (21) and a converter control unit (25) interacting with it, the speed regulator (21) outputting a target speed signal (n_{ref}), **characterized in that** an additional regulator (3) is provided on at least some of the wind turbines (1) that has an input (31) for additional power and is designed so as to generate a change of speed signal therefrom, taking into account a moment of inertia of the rotor, and to output it as an output signal that is added to the target speed signal via a logic element (29), and the wind farm control center (8) has an inertia control module (70) that apportions required additional power to the said fraction of the wind turbines (1, 1').

13. Wind farm according to Claim 12, **characterized in that** the inertia control module (70) is designed so as to apportion the additional power evenly to the rotating wind turbines, and it is in particular designed so as to apportion the additional power to the rotating wind turbines in such a way that the proportion of additional power of the individual wind turbines is determined from the ratio of the proportion of the moment of inertia of the rotors of the individual wind turbines in relation to the sum of the moments of inertia of the rotors of the rotating wind turbines in the wind farm.

14. Method for operating a wind turbine that comprises a wind rotor (12), a generator (14) driven by the latter and which interacts with a converter (15) to generate electrical power, a speed regulator (21) and a converter control unit (25) interacting with it, comprising the outputting of a target speed signal (n_{ref}), **characterized by** applying a signal for additional power, determining and outputting a change of speed signal that takes into account a moment of inertia of the rotor, and adding the change of speed signal to the target speed signal (n_{ref}).

15. Method according to Claim 14, **characterized in that** a wind turbine according to one of Claims 2 to 11 is used.

16. Method for operating a wind farm having a wind farm control center (8) and multiple wind turbines (1, 1'), the wind turbines each being provided with a wind rotor (12), a generator (14) driven by the latter and which interacts with a converter (15) to generate electrical power, a speed regulator (21) and a converter control unit (25) interacting with it, comprising the outputting of a target speed signal (n_{ref}), **characterized by**, for at least some of the wind turbines, applying a signal for additional power, determining and outputting a change of speed signal that takes into account a moment of inertia of the rotor, and adding the change of speed signal to the target speed signal (n_{ref}), and apportioning the required additional power to this fraction of the wind turbines by the wind farm control center (8).

17. Method according to Claim 16, **characterized in that** it is used in a wind farm according to either of Claims 12 and 13.

## Revendications

1. Aérogénérateur, comprenant un rotor d'éolienne (12), un générateur (14) entraîné par celui-ci, lequel coopère avec un convertisseur (15) pour générer de la puissance électrique, un régulateur de vitesse de rotation (21) et une commande de convertisseur (25) qui coopère avec celui-ci, le régulateur de vitesse de rotation (21) délivrant un signal de vitesse de rotation de consigne (n_{ref}),
**caractérisé en ce que**
il existe un régulateur supplémentaire (3) qui possède une entrée (31) pour une puissance supplémentaire et qui est configuré pour générer à partir de celle-ci, en tenant compte d'un moment d'inertie du rotor, un signal de modification de la vitesse de rotation et le délivrer sous la forme d'un signal de sortie qui est ajouté au signal de vitesse de rotation de consigne par le biais d'un élément combineur (29).

2. Aérogénérateur selon la revendication 1, **caractérisé en ce qu'**il existe un élément de correction (5) qui est configuré pour modifier des paramètres du régulateur supplémentaire (3) en fonction de la puissance supplémentaire appelée.

3. Aérogénérateur selon la revendication 2, **caractérisé en ce qu'**il existe un estimateur d'aérodynamisme (51) qui estime un taux de rendement aérodynamique et/ou la puissance de l'aérogénérateur.

4. Aérogénérateur selon la revendication 3, **caractérisé en ce qu'**il existe en outre un observateur de vent (52) qui, à partir des données relatives à la puissance et à la vitesse de rotation, détermine une vitesse du vent et la délivre à l'estimateur d'aérodynamisme (51).

5. Aérogénérateur selon l'une des revendications précédentes, **caractérisé en ce qu'**il existe un module d'inhibition (4) qui, en cas de fonctionnement à pleine charge, bloque le régulateur supplémentaire (3) et coopère de préférence avec un module de démarrage (41) qui est configuré pour avoir priorité sur le module d'inhibition (4) lors de variations d'une puissance supplémentaire.

6. Aérogénérateur selon l'une des revendications précédentes, **caractérisé en ce qu'**il existe un module de surveillance de valeur limite (6) qui est configuré pour limiter ou désactiver le régulateur supplémentaire (3) en fonction d'une violation de la valeur limite, notamment lorsqu'une valeur limite d'un taux de rendement aérodynamique, une limite électrotechnique et/ou une courbe caractéristique limite de couple dépendante de la vitesse de rotation est dépassée.

7. Aérogénérateur selon l'une des revendications précédentes, **caractérisé en ce que** le régulateur supplémentaire (3) possède un élément limiteur de couple qui est de préférence conçu pour limiter la variation de la vitesse de rotation.

8. Aérogénérateur selon l'une des revendications précédentes, **caractérisé en ce qu'**il existe un module de commutation de courbe caractéristique (24) pour le régulateur de vitesse de rotation (21) qui, en présence de la puissance supplémentaire, commute sur une autre courbe caractéristique ayant un couple plus élevé, un signal de limitation (Qblock) destiné à abaisser une puissance réactive délivrée étant de préférence généré, et une commutation de retour sur la courbe caractéristique originelle étant de préférence effectuée graduellement au moyen d'un élément d'enchaînement (43) lorsque la puissance supplémentaire prend fin.

9. Aérogénérateur selon l'une des revendications précédentes, **caractérisé en ce qu'**il existe un dispositif de détermination de la puissance supplémentaire (44) qui est conçu pour déterminer la puissance supplémentaire au moyen d'une fréquence mesurée dans le réseau (9, 99), notamment au moyen d'un élément à courbes caractéristiques dépendant de la fréquence.

10. Aérogénérateur selon la revendication 9, **caractérisé en ce que** le dispositif de détermination de la puissance supplémentaire (44) coopère avec un module dynamique (45), lequel détermine la puissance supplémentaire de préférence à partir de la profondeur et/ou du gradient dans le temps d'un effondrement de la fréquence dans le réseau (9, 99), et ce de préférence séparément pour le début et la fin au moyen d'un élément de croissance (46) et d'un élément de décroissance (47) qui ont de préférence mis en oeuvre des fonctions différentes.

11. Aérogénérateur selon l'une des revendications précédentes, **caractérisé en ce que** le régulateur supplémentaire (3) possède un module de gradient de vitesse de rotation (39) qui est configuré pour, après la fin de la puissance supplémentaire, prédéfinir un gradient minimal pour la croissance de la vitesse de rotation et de préférence un gradient maximal.

12. Parc éolien comprenant un maître de parc (8) et plusieurs aérogénérateurs (1, 1'), les aérogénérateurs étant respectivement pourvus d'un rotor d'éolienne (12), d'un générateur (14) entraîné par celui-ci, lequel coopère avec un convertisseur (15) pour générer de la puissance électrique, d'un régulateur de vitesse de rotation (21) et d'une commande de convertisseur (25) qui coopère avec celui-ci, le régulateur de vitesse de rotation (21) délivrant un signal de vitesse de rotation de consigne (n_{ref}),
**caractérisé en ce que**
il existe un régulateur supplémentaire (3) au moins au niveau d'une partie des aérogénérateurs (1), lequel possède une entrée (31) pour une puissance supplémentaire et qui est configuré pour générer à partir de celle-ci, en tenant compte d'un moment d'inertie du rotor, un signal de modification de la vitesse de rotation et le délivrer sous la forme d'un signal de sortie qui est ajouté au signal de vitesse de rotation de consigne par le biais d'un élément combineur (29), et le maître de parc (8) possède un module de contrôle d'inertie (70) qui répartit la puissance supplémentaire demandée sur ladite partie des aérogénérateurs (1, 1').

13. Parc éolien selon la revendication 12, **caractérisé en ce que** le module de contrôle d'inertie (70) est configuré pour répartir de manière régulière la puissance supplémentaire sur les aérogénérateurs en rotation, et il est notamment configuré pour répartir la puissance supplémentaire sur les aérogénérateurs en rotation de telle sorte que la part de puissance supplémentaire des aérogénérateurs individuels est déterminée à partir du rapport entre la part de moment d'inertie du rotor des aérogénérateurs individuels et la somme des moments d'inertie du rotor des aérogénérateurs qui sont en rotation dans le parc éolien.

14. Procédé pour faire fonctionner un aérogénérateur, comprenant un rotor d'éolienne (12), un générateur (14) entraîné par celui-ci, lequel coopère avec un convertisseur (15) pour générer de la puissance électrique, un régulateur de vitesse de rotation (21) et une commande de convertisseur (25) qui coopère avec celui-ci, comprenant une délivrance d'un signal de vitesse de rotation de consigne (n_{ref}),
**caractérisé par** les étapes suivantes
application d'un signal pour une puissance supplémentaire détermination et délivrance d'un signal de modification de la vitesse de rotation en tenant compte d'un moment d'inertie du rotor, et
ajout du signal de modification de la vitesse de rotation au signal de vitesse de rotation de consigne (n_{ref}).

15. Procédé selon la revendication 14, **caractérisé en ce qu'**un aérogénérateur selon l'une des revendications 2 à 11 est utilisé.

16. Procédé pour faire fonctionner un parc éolien comprenant un maître de parc (8) et plusieurs aérogénérateurs (1, 1'), les aérogénérateurs étant respectivement pourvus d'un rotor d'éolienne (12), d'un générateur (14) entraîné par celui-ci, lequel coopère avec un convertisseur (15) pour générer de la puissance électrique, d'un régulateur de vitesse de rotation (21) et d'une commande de convertisseur (25) qui coopère avec celui-ci, comprenant une délivrance d'un signal de vitesse de rotation de consigne (n_{ref}),
**caractérisé par** les étapes suivantes
pour au moins une partie des aérogénérateurs, application d'un signal pour une puissance supplémentaire,
détermination et délivrance d'un signal de modification de la vitesse de rotation en tenant compte d'un moment d'inertie du rotor, et
ajout du signal de modification de la vitesse de rotation au signal de vitesse de rotation de consigne (n_{ref}), et aussi
répartition de la puissance supplémentaire demandée sur cette partie des aérogénérateurs par le maître de parc (8).

17. Procédé selon la revendication 16, **caractérisé en ce qu'**il est utilisé dans un parc éolien selon l'une des revendications 12 ou 13.
